# EUROPEAN PATENT SPECIFICATION

(11) **EP 2 932 859 B1**
(45) Date of publication and mention of the grant of the patent: **10.04.2019**
(21) Application number: 15163643.8
(22) Date of filing: 15.04.2015
(51) Int. Cl.: A23N 15/00, B26D 3/26

(54) **MECHANISM FOR STRIPPING BY AUTOMATIC TURNING OF ARTICHOKES OF DIFFERENT SIZES**
MECHANISMUS ZUM ENTBLÄTTERN VON ARTISCHOCKEN UNTERSCHIEDLICHER GRÖSSE MITTELS DREHEN
MÉCHANISME POUR DÉFEUILLAGE DES ARTICHAUTS DE TAILLES DIFFÉRENTES PAR TOURNASAGE

(30) Priority: 15.04.2014 IT VR20140096
(43) Date of publication of application: 21.10.2015
(73) Proprietor: Zenari Engineering di Zenari Fausto & C. S.N.C., 37050 Oppeano (VR) (IT)
(72) Inventor: Zenari, Fausto, 37050 OPPEANO (VR) (IT)
(74) Representative: Sandri, Sandro

(56) References cited:
- EP-A1- 1 378 181
- FR-A1- 2 707 844
- FR-A5- 2 049 276
- FR-A5- 2 123 644
- US-A- 1 604 347
- US-A- 3 374 881
- US-A- 3 618 650

## Description

### TECHNICAL FIELD

This invention relates to a head for stripping by turning artichokes or other similar vegetables or fruits, wherein the cutting blade can be moved by an adjustment system even when the turning device is rotated about its axis, and which allows the diameter of turning to be varied, adapting it automatically to the diameter of the artichoke, during the processing step.

This invention is applied in the mechanical field of machines for turning artichokes and similar vegetables, with feeding on a processing line or carousel.

### BACKGROUND ART

It is known that the mechanical processing of artichokes consists in removing the leaves and the outermost inedible part of the vegetable from the innermost and fleshy part, that is, the edible part.

This is normally performed in an automatic machine with an intermittent alternating movement, the individual artichokes being firstly positioned manually between the jaws of a locking device which clamps the artichoke itself. The stem is at the same time positioned in a hole belonging to a positioning plate positioned below the jaws and movable with them in the horizontal direction. The artichoke is then translated horizontally by means of a chain and crown wheels mechanism towards a first processing station which shortens the stem, a second processing station which cuts the leaves of the remaining portion of the stem and positions the artichoke at a predetermined height, a third station which cuts the stem at the start of the stalk, a fourth station which turns the stalk until exposing the heart and which at the same time cuts the top of the artichoke, and lastly a fifth station for unloading the heart so obtained.

Currently, the processing of the artichokes aimed at mechanically removing the outermost inedible part does not use a machine equipped with a motor-driven turning head with fixed blades positioned before the processing depending on the diameter of the artichoke to be processed.

These machine typically comprise a conveying device with intermittent feed, on which there are pairs of jaws driven by springs. The artichokes to be processed are manually inserted between pairs of opposite plates, and locked in position on the conveyor for the subsequent processing operations.

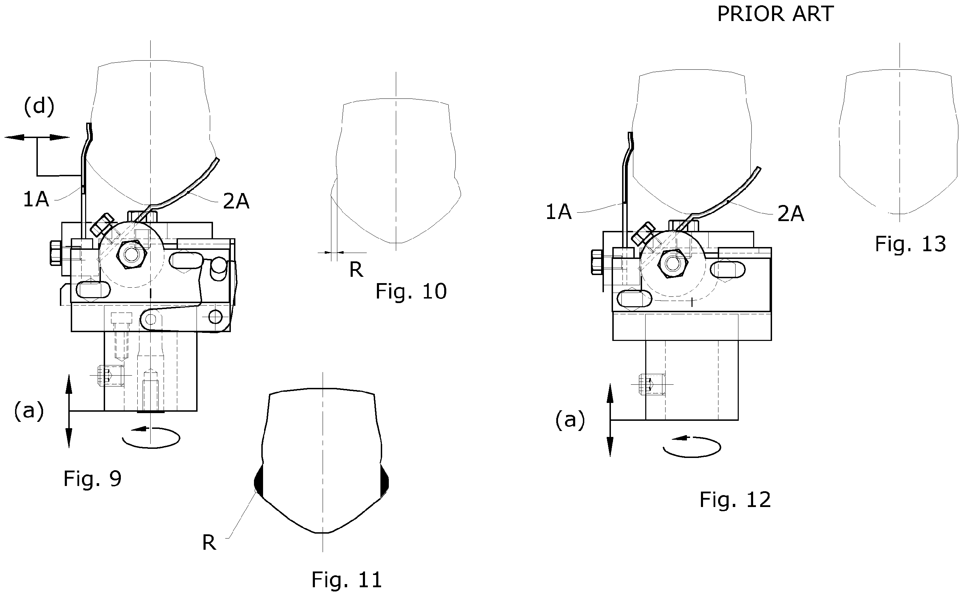

More specifically, each artichoke is locked in such a way that it is, during the intermittent feed movement, aligned with the axis of the turning device. The turning head, rotated quickly, is then moved axially towards the artichoke, and in this step the blades with which the head is equipped come into contact with the artichoke and, due to their combined motion of axial forward movement and simultaneous rotation on the same axis, remove the fibrous outer part of the artichoke. As shown in Figure 12, which represents an example embodiment of a device for turning artichokes according to the prior art, the turning head is equipped with two cutting blades, one inclined relative to the axis of rotation and which turns the bottom of the artichoke giving it a conical or conical rounded shape, and one circumferential which turns the outer part of the artichoke in a cylindrical or shaped cylindrical manner, that is to say, substantially ovoid. Both the blades are positioned at the start of processing in a position such as to optimise the processing, in order to minimise the waste. More specifically, the bottom blade is adjusted to a particular inclination and the circumferential blade is fixed in a radial position determined by the diameter of the artichoke being processed. Before the processing, the artichokes are calibrated according to their outside diameter and subdivided into groups of diameters which differ in size by 5 millimetres or more.

The artichokes of a same size range have a diameter variable between a minimum and a maximum and the turning head is therefore typically adjusted by positioning the two cutting blades in such a way as to optimise the processing of the artichoke with an average diameter relative to the range being processed.

Disadvantageously, if this prior art method is used for artichokes with smaller diameters, less is turned than necessary and they therefore have outer fibrous leaves which are inedible, therefore making it necessary to remove them manually by hand, whilst artichokes with larger diameters are, on the other hand, turned more than necessary and part of the edible pulp of the artichoke is removed, with a consequent unnecessary loss of product.

In other words, with a fixed adjustment of the blades of the turning head in the prior art, there are additional costs both for the processing of the larger artichokes, with edible parts unnecessary eliminated, and in the processing of the smaller artichokes which must be finished by hand.

Moreover, the lack of means for radial movement of the circumferential blade and the need to move the blades only with axial advance on the traditional machines only allowed finished artichokes to be obtained with cylindrical or substantially cylindrical shapes, losing in this way some of the most highly valued parts of the artichokes.

Solutions are known for example as described in patent documents FR2123644 and FR2707844 which comprise means for cutting the outermost and inedible part of the artichokes, which in the first case comprise blades partly adjustable with respect to a pin located on an axis parallel to the axis of rotation of the cutting head, which, however, do not allow to compensate precisely for the sizes of artichokes as there is no device allowing the size of the product being processed to be controlled, whilst in the second case, besides there not being any device for measuring and controlling the size of the product being processed, the cutting unit allows for very limited and imprecise adjustments.

Document US-A-3,618,650 discloses an apparatus for preparing the receptactles of artichoke bottoms, comprising a support for the receptactle, a blowing head for removing the leaves and the choke from the receptacle, sucker means for picking up the receptacle bottom from the support after such bottom has been cleaned by the blowing head, and machining means for removing irregularities in the shape of the bottom caused by removal of the leaves.

### DESCRIPTION OF THE INVENTION

The aim of this invention is to provide a mechanism for the automatic turning of artichokes with different sizes which is able eliminate or at least reduce the above-mentioned drawbacks.

The aim of this invention is to provide a mechanism for the automatic turning of artichokes which is relatively easy to make and if necessary adaptable to existing machines,avoiding, on the one hand, manual intervention for stripping smaller artichokes and, on the other hand, the loss of product for larger artichokes, and also obtaining a precise shaping of the tender part of the vegetable using a shaped blade and imparting to it an additional radial motion synchronised with means for measuring the dimensions of the product being processed.

This is obtained by a mechanism for the automatic turning of artichokes the features of which are described in claim 1.

The dependent claims of the solution in this invention describe advantageous embodiments of the invention.

The mechanism for the automatic turning of artichokes according to this invention allows automatic correction of the turning diameter as a function of the measured diameter of the artichoke being processed and allows the artichoke to be given a circumferential shape in such a way as to achieve the maximum use of the edible part.

The turning head is equipped with two blades with straight or shaped cutting edges, one of which has the function of turning the bottom of the artichoke and the other of turning the circumferential part of it. During the processing step the head is rotated and moved close to the artichoke, in such a way that the blades eliminate the outer fibrous leaves and there remains only the tender and edible part of the artichoke.

According to the invention, unlike the traditional prior art solutions, it is possible to move the circumferential cutting blade even when the head is rotated.

According to the invention, in short, it is possible to vary the turning diameter, adapting it to the diameter of the artichoke during the processing step.

According to the invention, it is also possible to obtain shaped artichokes using a circumferential blade with a profile corresponding to that desired. The same result can be obtained by combining the radial movement of a point-like blade with the axial movement of the turning head.

### DESCRIPTION OF THE DRAWINGS

Other features and advantages of the invention will become clear on reading the description given below of one embodiment, provided as a non-limiting example, with the help of the accompanying drawings, in which:
- Figures 1 and 2 are two perspective views of a turning head belonging to a mechanism according to the invention;
- Figure 3 is a side view of a turning head of the mechanism according to the invention;
- Figure 4 is a middle cross section of the head along the broken line A-A of Figure 3;
- Figure 5 is a middle cross section of the head along the plane B-B of Figure 4;
- Figure 6 shows the diametral section along the plane B-B of a variant of the turning head wherein the transmission linkages are made with rack and pinion;
- Figure 7 shows the schematic view of a mechanism according to the invention wherein the measurement of the size of the artichoke and the positioning of the circumferential cutting blade on the turning head are obtained with a system of mechanical linkages and by a pneumatic cylinder, and the movement is controlled with a relative bell and lever located at the end of the rotation shaft from the opposite side relative to the turning head;
- Figure 8 is a schematic representation of the machine for turning artichokes wherein the measurement of the size of the artichoke is obtained with an electronic transducer device, the signal of which, adequately amplified and processed, controls an electric actuator which determines the positioning of the cutting blade on the turning head.
- Figure 9 is a view of the head according to the invention on which the shape of the artichoke which can be obtained with it is schematically shown;
- Figures 10 and 11 schematically show the portion of artichoke which can be obtained using the cutting head according to the invention equipped with a shaped circumferential blade mounted on a head with the possibility of moving the circumferential blade radially during the processing;
- Figures 12 and 13 are views of a head for turning artichokes of the conventional type and of the artichoke obtained;
- Figure 14 shows the turning head, mounted on the shaft which imparts the rotary motion, in a further embodiment in which the control for radial movement of the blade is obtained with a sleeve outside the shaft.

### DESCRIPTION OF ONE EMBODIMENT OF THE INVENTION

The invention according to this description proposes, as mentioned, to automatically correct the turning diameter as a function of the diameter of the artichoke being processed and give the artichoke a circumferential shape in such a way as to obtain the maximum use of the edible part of the vegetable using a suitably profiled blade and giving it a radial motion whilst the axial movement of the turning head is at the its upper dead centre.

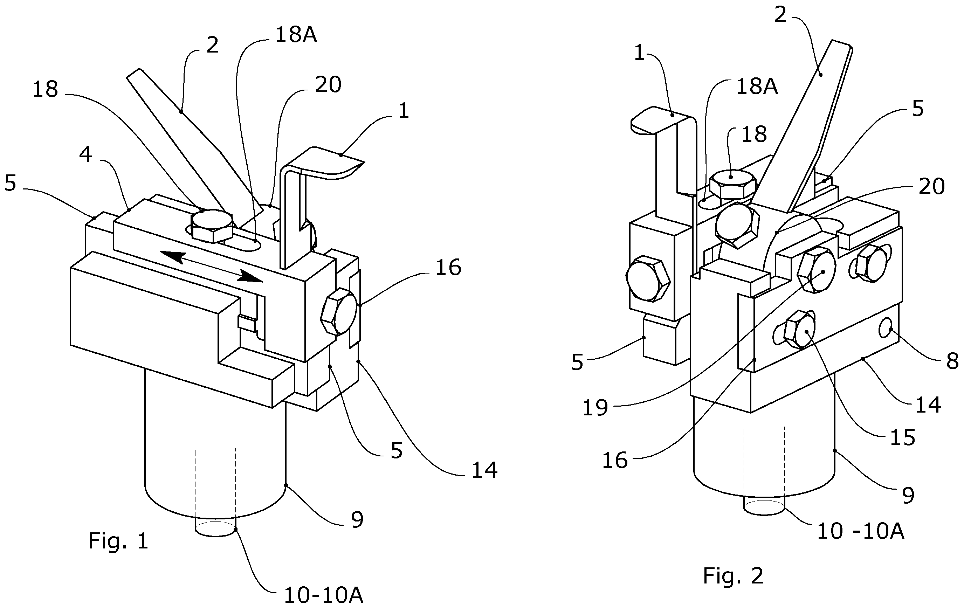

A turning head of the mechanism according to this invention is illustrated in Figures 1 to 5 and comprises a perforated body 9 substantially cylindrical and movable in rotation about its own longitudinal axis, and on which is fixed a flank 14.

In the turning head there is a slide 5 which slides with a radial motion in a compartment created by the perforated body 9 and by the flank 14, whilst in the upper part there is a blade holder 4 which is fixed on the slide 5 by a screw 18, in such a way that during the adjustment step it can be moved to the most suitable position along a slot 18A formed on the blade holder 4.

The blade holder 4 supports a first blade 1 which is positioned with a substantially vertical alignment and which is formed to cut the circumference of the artichoke whilst the head moves in a rotational direction and simultaneously in a longitudinal direction towards the artichoke.

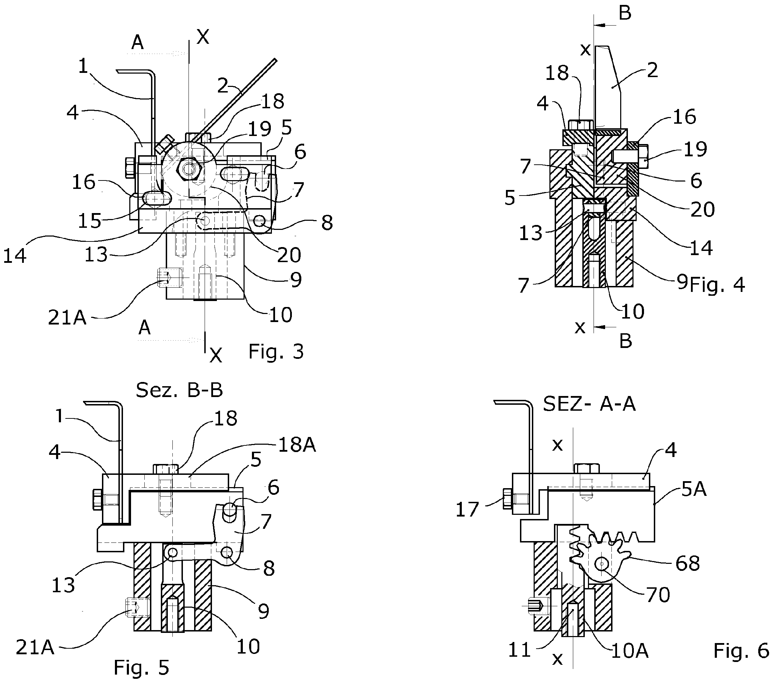

The perforated body 9 is in turn fixed by a grub screw 21a, to a rotation shaft, as shown in Figures 3 and 5.

According to a feature of the invention the slide 5 and the respective blade holder 4 on which the first blade 1 is fixed by means of a pin 6 integral with the slide 5 may be moved radially by a right-angled lever 7 which is pivoted on a pin 8 which is housed in the hole of the flank 14.

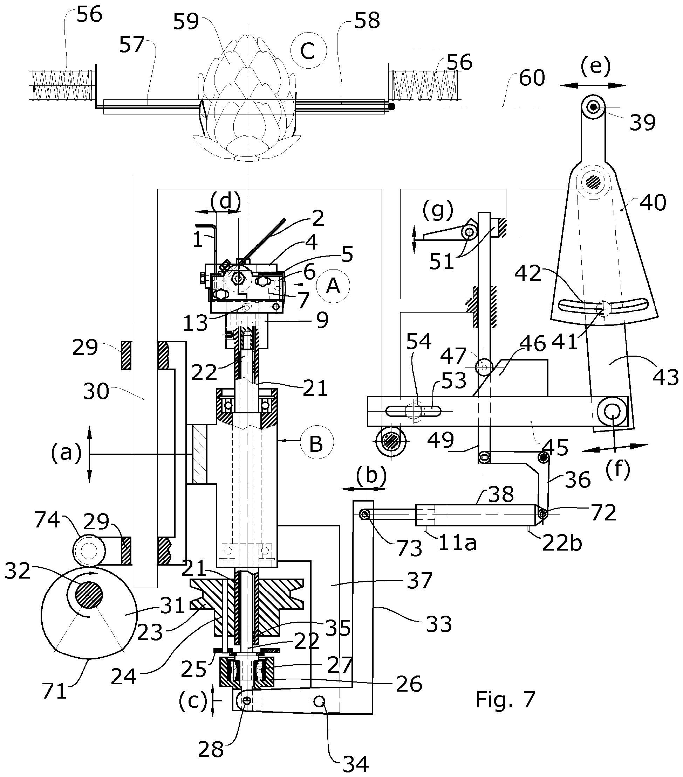

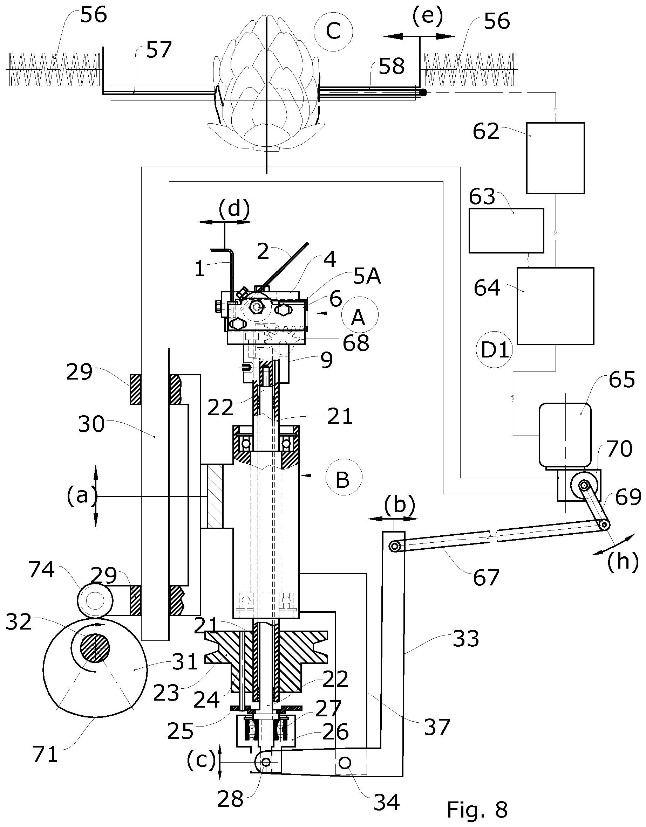

Inside the perforated body 9 a further pin 13 connects the right-angled lever 7 to a fork-shaped pin 10 which has a thread on which is axially screwed a control rod 22 (Figures 7 and 8), positioned inside the shaft of a spindle 21.

Figure 6 is an alternative embodiment according to which the blade 1 is fixed on a slide with rack 5A which meshes with a toothed sector 68 rotatable about a pin 70. The toothed sector 68 also meshes with a pin with rack 10A so that the blade 1 may be moved radially with an axial movement of the pin 10A.

In the upper end of the turning head there is also a second oblique blade 2, designed to cut the bottom of the artichoke, which is fixed to a cylindrical pad 20 by a suitable screw 19. The pad 20 is in turn pivoted to a stop plate 16 by the screw 19 and may therefore rotate about it allowing the oblique blade 2 to be fixed at the most suitable inclination.

The plate 16 is also provided with slots and by screws 15 may be fixed also radially in the most suitable position.

The threaded connection between control rod 22 and fork-shaped pin 10 allows the turning head to be removed in small spaces simply by loosening the grub screw 21a and unscrewing, with the rotation of the head A, the pin 10 from the rod 22.

As shown in Figure 7, the blade 1 is subject to a rectilinear translational movement together with the slide 5 in the direction indicated by the arrow "d" by a control system formed by a lever 33 which is pivoted to a pin 34 on a fixed arm 37, in such a way that it can lift or lower a bell 26 by means of a pin 28.

In turn, the bell 26 houses a bearing 27, designed to also withstand axial thrusts, which transmits to the rod 22 only the axial movement of the bell 26 and not the rotary movement.

Again in Figure 7, it should be noted that the shaft of the spindle 21, which supports and rotates the turning head (A), is tubular in shape and houses the control rod 22 which can slide axially on bushings 35 even when the shaft is rotated by a pulley 23.

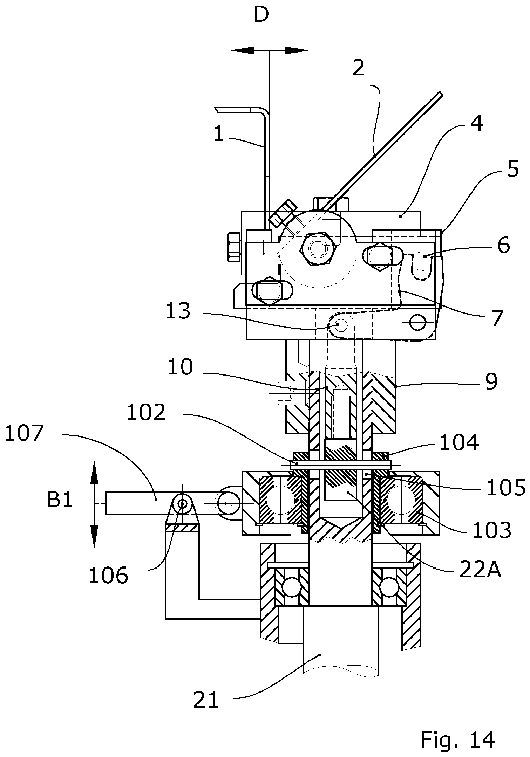

Figure 14 shows a further embodiment according to which a pin 102 connects a driving sleeve 104 to the rod 22A through slots 105 made on the shaft 21 in such a way that an axial movement of the sleeve 104 imparted by the lever 107 pivoted in the pin 106, is transmitted to the fork-shaped rod 10 which is fixed to the rod 22A.

Also in this case, the bell 101, thanks to a bearing 103, allows the sleeve 104 to be controlled even when the head (A) is rotated.

Figure 7 shows the rod 21 to which a disc 25 is keyed, which is moved by the pin 24 ensuring identical angular rotations between shaft of the spindle 21 and control rod 22 preventing the possibility of unscrewing of the fork-shaped pin 10 or the pin 10A.

The control spindle (B), attached to a pair of slides 29, is imparted a reciprocal motion vertical (a) through a roller 74 which contrasts with a cam 31 controlled by a shaft 32.

The slides 29 are guided by the rods 30 which are fixed relative to the frame of the turning machine.

It may be noted that, with the device described above, if the adjustment movement (b) is made, relative to the slide 29 using the lever 33, this will determine the axial movement of the rod 22 and the fork-shaped pin 10 which will rotate the fork-shaped lever 7 and, using the pin 6, will move the slide 5 as well as the first blade 1.

If the movement (b) set for the lever 33 is proportional to the diameter of the artichoke being processed, the circumferential blade 1 will be positioned in such a way as to correct the setting diameter of the head.

In this way, if the artichoke being processed is larger than the set diameter of the blade 1 it will be moved on a greater turning radius, whilst if the artichoke being processed has smaller diameter, the blade will be positioned on a smaller turning radius.

Also, if the forward and return movement (b) is imparted with the perforated cylindrical body 9 stationary at the upper point a shape of artichoke will be obtained corresponding to the shaping of the first blade 1.

From an operational point of view, the turning machine set up on production line or carousel is equipped with plates or jaws 57 and 58 for supporting the artichokes to be processed, shaped with a "V" part, which are mounted opposite each other in such a way as to form a lozenge shaped opening in which the artichoke is inserted.

A device driven by springs 56 schematically illustrated in Figures 7 and 8 locks the artichoke 59 in the lozenge shaped opening of the plates during processing.

The device for clamping the plates shown in Figure 7 is connected to a transmission lever 40 using connection 60, in such a way that, with a variation in the diameter of the artichoke a pin 39 moves in the directions indicated by (e) which translate into the amplified movements (f), by means of a lever 40 fixed to a lever 43 using a screw 41 which can be positioned on a circumferential slot 42.

The tightening position of the screw 41 on the slot 42 is adjusted as a function of the average diameter of the artichoke which will be processed.

The blades of the turning head are adjusted for processing in an optimum manner artichokes with the average diameter of the range being processed. For example, if the range selected comprises diameters varying from 40 to 45 mm the blades will be set up for cutting 42.5 mm diameter corresponding to the setting diameter.

After inserting a sample artichoke with setting diameter between the lock plates 57 and 58, the lever 43 is adjusted on the slot 42 and it is fixed with the screw 41 in such a way that a roller 47 is at the centre of the inclined plane 46.

With reference to Figure 7, the connection between the pin 72 of the lever 36 and the pin 73 of the lever 33 is made with a pneumatic cylinder 38 which, normally fed with compressed air at its infeed 22b, is in the its maximum extension, that is, with the maximum distance between the pins 73 and 72.

After rotating the turning head (A) using the shaft 21 of the spindle (B), the cam 31 is set in rotation by the shaft 32 in such a way as to impart to the slide 29 the cyclical motion (a) which moves the blades 1 and 2 towards the artichoke removing the outermost leaves.

As soon as the slide 29 reaches its upper dead centre, which corresponds to the working position of the roller 74 on the arc of constant radius 71 of the cam 31, a solenoid valve intervenes which switches the supply of the cylinder 38 supplying its infeed 11a determining the minimum extension, that is to say, the minimum distance between the pins 73 and 72 causing the maximum movement of the blade 1 towards the axis of rotation, therefore causing the turning of the artichoke at the desired diameter.

During this step, a device 51 locks the rod 49 for the entire arc 71 and therefore also locks the lever 36 thus fixing the pin 72.

Immediately after the step of withdrawing the piston, the solenoid valve switches the supply of the cylinder causing the maximum extension so that the blade 1 moves away from the artichoke and, during the step of lowering the slide 29, the blade 1 does not unnecessarily remove material from the artichoke.

The operations of extending and withdrawing the piston, which correspond to the moving of the blade 1 towards and away from the centre of rotation, occur when the slide is stationary at the upper dead centre, that is, when the roller operates on the arc 71 of the cam 31.

The diameter of the finished artichoke is in short determined by the position of the pin 72 and by the stroke of the cylinder 38.

If the artichoke rotated has a diameter greater than the setting diameter the levers 40 and 43 rotate in a clockwise direction, moving the rod 45 and the inclined surface 46 thus determining the raising of the roller 47 and the rod 49 which supports it determining the clockwise rotation of the lever 36 with a movement towards the left of the pins 72 and 73 which corresponds to the anticlockwise rotation of the lever 33 with consequent moving away of the blade 1 from the centre of rotation which corresponds to a greater turning diameter.

The adjusting device acts in the opposite direction when the artichoke has a smaller diameter.

If a station is not provided with an artichoke end of stroke striker 54 limits the movement of the rod 45 on the slot 53 and brings the roller in contact with the flat part which corresponds to the maximum stroke towards the centre of rotation of the blade 1.

From the above description it may be easily inferred that the device according to this invention achieves the aim of turning the artichoke to variable diameters depending on the initial diameter of the artichoke itself.

It is also evident that the radial movement of the blade makes it possible to obtain a circumferential shape of the artichoke shaped according to the outline of the cutting blade with the possibility of optimising the use of the vegetable by turning the more tender part of the artichoke to larger diameters and the part where the leaves are more fibrous to smaller diameters.

Figure 8 illustrates a further embodiment of the machine for turning artichokes wherein the measurement of the size of the artichoke is obtained with an electronic transducer device, the signal of which, adequately amplified and processed, controls an electric actuator which determines the positioning of the cutting blade on the turning head.

Figure 8 shows how, in this case, the measuring system uses a position transducer 62, an operator panel for setting processing parameters 63, a processor and a motor control drive 64 and a brushless motor 65.

The brushless motor controls a reduction gear unit 70, the output shaft of which is keyed to a crank 69 which acts with a connecting rod 67 on the lever 33 and from this, through the linkages already described above, on the slide 5A and thus on the first blade 1.

In this case, the turning head (A) is formed by the slide with rack 5A as shown in Figure 6, controlled by the toothed sector 68 and by the fork-shaped pin 10.

When the artichoke arrives at the processing station the transducer 62 measures the size of the raw artichoke and when an electrical signal sent by suitable microswitch is received a processor stores the value on the slide 5A and thus on the first blade 1.

In this case, the turning head (A) is formed by the slide with rack 5A as shown in Figure 6, controlled by the toothed sector 68 and by the fork-shaped pin 10.

When the artichoke arrives at the processing station the transducer 62 measures the size of the raw artichoke and when an electrical signal sent by suitable microswitch is received a processor stores the value measured by the transducer 62 and calculates with an algorithm the diameter of the finished artichoke taking also into account the variety of the artichoke itself.

This value is communicated to the drive which positions the blade 1, so that, during the rising stroke of the slide B, the blade removes the outer leaves up to the calculated diameter.

If the blade is straight no further movement of the blade is necessary, thus not removing further artichoke during the lowering of the slide B.

As shown in Figures 9, 10 and 11, if the blade 2A is shaped it is necessary that, whilst the slide B is present in its upper end-of-stroke position, corresponding to the arc 71 of the lifting cam 31 (Figure 8), the blade 1A moves towards the centre of width equal to the measurement R and immediately afterwards moves away by an amount equal to or greater than R so as to prevent contact between blade and artichoke during the lowering of the slide B.

## Claims

1. A mechanism for stripping artichokes of different sizes by automatic turning in a turning machine with intermittent alternating feed, comprising a conveyor which has a locking device wherein individual artichokes (59) are positioned manually between pairs of shaped jaws (57, 58) having elastic pusher means (56) opposite each other for clamping the artichokes, wherein the intermittent feed movement of the conveyor is temporarily stopped so that the artichoke to be processed reaches the turning head equipped with at least one blade (1) designed to strip by turning the outer portion of the artichoke itself, the turning head being mounted on a hollow cylindrical body (9) rotating and movable with vertical translational in order to allow the gradual turning of the stalk of the artichoke, wherein the at least one blade (1) is mounted on a slide (5) movable in horizontal translation along a wall (14) rigidly connected to the hollow cylindrical body (9), the slide (5) being equipped with manual adjustment means (18, 18A) for manually adapting the turning diameter of the stalk of the artichoke to an average size of artichoke to be processed, the mechanism being **characterised in that** it also comprises mechanical means (33, 38, 36, 47. 46, 45, 43, 40, 39) and/or mechatronic means (33, 67, 69, 65, 64, 63, 62) for automatically measuring the diameter of the artichoke being processed and simultaneously adapting the working distance of the at least one blade (1) by translation of the slide (5) along the wall in such a way as to automatically strip by turning each artichoke on the basis of the actual diameter measured between the two jaws (57, 58) opposite each other.

2. The mechanism according to claim 1, **characterised in that** the mechanical means (33, 38, 36, 47. 46, 45, 43, 40, 39) comprise a first pin (39) movable in translation together with one of the jaws (58) and belonging to a first lever (40) which comprises, at a relative end, a slot (42) inside of which slides and may be fixed a second pin (41) belonging to a second lever (43) in turn connected to a third lever (45) that transfers the translation movement of the first pin (39) to a roller (47) which slides on an inclined plane (46) constrained to the third lever (45), **in that** the roller (47) is in turn constrained to a rod (49) movable in translation, one end of which is connected to a fourth lever (36) movable in rotation about a third pin and which transfers the translational movement of the rod (49) to a pneumatic cylinder (38) the piston of which is connected to a fifth lever (33) which is respectively connected by a part to the control shaft (32) of the machine by a cam (31) and a sixth lever (37), and by the other side to a control rod (22) positioned inside the hollow cylindrical body (9) and which determines the movement in translation of the slide (5) on which is fixed the first blade (1) on the basis of the opening or closing movement of the jaws (57, 58), and, therefore, the diameter of the artichoke being processed, as measured by the movement of the first pin (39) and transmitted by the other mechanical components described above to the control rod (22).

3. The mechanism according to claim 1, **characterised in that** the mechatronic means (33, 67, 69, 65, 64, 63, 62) comprise a position transducer (62) designed to measure the opening or closing movement of the jaws (57, 58) relative to a predetermined base position, a microprocessor which processes the information relative to the movement measured by the transducer (62) and which controls an electric motor (65) to which a linkage (69, 67) is connected, in turn connected to an end of a further lever (33) which is respectively connected from one part to the control shaft (32) of the machine by a cam (31) and another lever (37), and from the other part to a control rod (22) located inside the hollow cylindrical body (9) and which determines the movement in translation of the slide (5) on which is fixed the first blade (1) on the basis of the opening or closing movement of the jaws (57, 58), and, therefore, of the diameter of the artichoke being processed, as measured by the movement of the first pin (39) and transmitted by the other above-mentioned mechanical components to the control rod (22).

4. The mechanism according to one of the preceding claims, **characterised in that** the control rod (22) is connected to the slide (5) on which is fixed the first blade (1) using a right-angled lever (7), pivoted (8) on the fixed wall (14), wherein a first end of said right-angled lever (7) is fork shaped and engages a pin (6) integral with the slide, whilst a second end of said right-angled lever (7) is connected by another pin (13) to the control rod.

5. The mechanism according to any of claims 1 to 3, **characterised in that** the control rod (22) is connected to the slide (5A) on which is fixed the first blade (1) using a toothed sector (68) rotatable about a fixed pin (70), wherein the toothed sector engages on one side a first rack integral with the slide (5A) and on the other side a second rack integral with the control rod (22).

6. The mechanism according to one of the preceding claims, **characterised in that** it comprises a second blade (2) inclined relative to the axis of rotation and which turns the bottom of the artichoke giving it a conical or conical rounded shape.

## Patentansprüche

1. Mechanismus zum Abziehen von Artischocken verschiedener Größe durch automatisches Drehen in einer Drehmaschine mit aussetzender abwechselnder Zufuhr, umfassend einen Förderer, der ein Sperrgerät umfasst, wobei einzelne Artischocken (59) manuell zwischen Paaren von Formbacken (57, 58) angeordnet werden, welche elastische, einander gegenüberliegende Schiebemittel (56) zum Einspannen der Artischocken aufweisen, wobei die aussetzende Zufuhrbewegung vorübergehend angehalten wird, sodass die Artischocke, die verarbeitet werden soll, den Drehkopf erreicht, der mit zumindest einer Klinge (1) ausgestattet ist, welche zum Abziehen durch Drehen des Außenabschnitts der Artischocke selbst ausgelegt ist, wobei der Drehkopf an einem hohlen zylindrischen Körper (9) angebracht ist, der sich dreht und mit vertikaler Verschiebung beweglich ist, um das allmähliche Drehen des Stiels der Artischocke zu ermöglichen, wobei die zumindest eine Klinge (1) auf einem Gleitstück (5) angebracht ist, das in horizontaler Verschiebung entlang einer Wand (14) beweglich ist, welche starr mit dem hohlen zylindrischen Körper (9) verbunden ist, wobei das Gleitstück (5) mit manuellen Anpassungsmitteln (18, 18A) zum manuellen Anpassen des Drehdurchmessers des Stiels der Artischocke an eine Durchschnittsgröße von Artischocken, die verarbeitet werden sollen, ausgestattet ist, wobei der Mechanismus **dadurch gekennzeichnet ist, dass** er außerdem mechanische Mittel (33, 38, 36, 47, 46, 45, 43, 40, 39) und/oder mechatronische Mittel (33, 67, 69, 65, 64, 63, 62) zum automatischen Messen des Durchmessers der Artischocke, die verarbeitet wird, und gleichzeitigen Anpassen des Arbeitsabstands der zumindest einen Klinge (1) durch Verschieben des Gleitstücks (5) entlang der Wand zum automatischen Abziehen durch Drehen jeder Artischocke auf der Grundlage des aktuellen Durchmessers, der zwischen den zwei, sich gegenüberliegenden Backen (57, 58) gemessen ist, umfasst.

2. Mechanismus nach Anspruch 1, **dadurch gekennzeichnet, dass** die mechanischen Mittel (33, 38, 36, 47, 46, 45, 43, 40, 39) einen ersten Stift (39) umfassen, der in Verschiebung zusammen mit einer der Backen (58) beweglich ist und zu einem ersten Hebel (40) gehört, welcher an einem relativen Ende einen Schlitz (42) umfasst, innerhalb dessen ein zweiter Stift (41) gleitet und befestigt sein kann, der zu einem zweiten Hebel (43) gehört, welcher wiederum mit einem dritten Hebel (45) verbunden ist, der die Verschiebungsbewegung des ersten Stifts (39) auf eine Rolle (47) überträgt, welche auf einer schiefen Ebene (46) gleitet, die am dritten Hebel (45) eingespannt ist, dass die Rolle (47) wiederum an einer Stange (49) eingespannt ist, die in Verschiebung beweglich ist, und deren eines Ende mit einem vierten Hebel (36) verbunden ist, der in Drehung um einen dritten Stift beweglich ist, und der die Verschiebungsbewegung der Stange (49) auf einen Pneumatikzylinder (38) überträgt, dessen Kolben mit einem fünften Hebel (33) verbunden ist, welcher jeweils an einem Teil mit der Steuerwelle (32) der Maschine durch einen Nocken (31) und einen sechsten Hebel (37) verbunden ist und an der anderen Seite mit einer Steuerstange (22) verbunden ist, die innerhalb des hohlen zylindrischen Körpers (9) angeordnet ist, und die die Bewegung in Verschiebung des Gleitstücks (5), auf dem die erste Klinge (1) befestigt ist, auf der Grundlage der Öffnungs- oder Schließbewegung der Backen (57, 58) und dadurch den Durchmesser der Artischocke, die verarbeitet wird, bestimmt, wie durch die Bewegung des ersten Stifts (39) gemessen und durch die anderen mechanischen Bauteile, die oben beschrieben sind, auf die Steuerstange (22) übertragen.

3. Mechanismus nach Anspruch 1, **dadurch gekennzeichnet, dass** die mechatronischen Mittel (33, 67, 65, 64, 63, 62) einen Positionsgeber (62), der zum Messen der Öffnungs- oder Schließbewegung der Backen (57, 58) bezüglich einer vorgegebenen Basisposition ausgelegt ist, einen Mikroprozessor umfassen, der die Information bezüglich der Bewegung, die durch den Geber (62) gemessen wird, verarbeitet, und der einen Elektromotor (65) steuert, mit dem ein Getriebe (69, 67) verbunden ist, das wiederum mit einem Ende eines weiteren Hebels (33) verbunden ist, welcher jeweils an einem Teil mit der Steuerwelle (32) der Maschine durch einen Nocken (31) und einen weiteren Hebel (37) verbunden ist und am anderen Teil mit einer Steuerstange (22) verbunden ist, die sich innerhalb des hohlen zylindrischen Körpers (9) befindet, und die die Bewegung in Verschiebung des Gleitstücks (5), auf dem die erste Klinge (1) befestigt ist, auf der Grundlage der Öffnungs- oder Schließbewegung der Backen (57, 58) und dadurch den Durchmesser der Artischocke, die verarbeitet wird, bestimmt, wie durch die Bewegung des ersten Stifts (39) gemessen und durch die anderen, oben angegebenen mechanischen Bauteile auf die Steuerstange (22) übertragen.

4. Mechanismus nach einem der vorhergehenden Ansprüche, **dadurch gekennzeichnet, dass** die Steuerstange (22) mit dem Gleitstück (5), auf dem die erste Klinge (1) befestigt ist, unter Benutzung eines rechtwinkligen Hebels (7) verbunden ist, der an der starren Wand (14) angelenkt (8) ist, wobei ein erstes Ende des rechtwinkligen Hebels (7) gabelförmig ist und einen Stift (6) in Eingriff nimmt, der mit dem Gleitstück einstückig ist, während ein zweites Ende des rechtwinkligen Hebels (7) durch einen anderen Stift (13) mit der Steuerstange verbunden ist.

5. Mechanismus nach einem der Ansprüche 1 bis 3, **dadurch gekennzeichnet, dass** die Steuerstange (22) mit dem Gleitstück (5A), auf dem die erste Klinge (1) befestigt ist, unter Benutzung eines gezahnten Sektors (68) verbunden ist, der um einen starren Stift (70) drehbar ist, wobei der gezahnte Sektor auf einer Seite in eine erste Zahnstange eingreift, die mit dem Gleitstück (5A) einstückig ist, und auf der anderen Seite in eine zweite Zahnstange, die mit der Steuerstange (22) einstückig ist.

6. Mechanismus nach einem der vorhergehenden Ansprüche, **dadurch gekennzeichnet, dass** er eine zweite Klinge (2) umfasst, die bezüglich der Drehachse geneigt ist, und die die Unterseite der Artischocke dreht und ihr eine konische oder konisch gerundete Form verleiht.

## Revendications

1. Mécanisme d'épluchage d'artichauts de différentes tailles par rotation automatique dans une machine à tourner à alimentation alternée et intermittente, comprenant un transporteur équipé d'un dispositif de verrouillage dans lequel des artichauts individuels (59) sont positionnés manuellement entre des paires de mâchoires profilées (57, 58) pourvues de moyens formant des poussoirs élastiques (56) opposés les uns aux autres et destinés à serrer les artichauts, dans lequel le mouvement d'alimentation intermittent du transporteur est temporairement arrêté pour que l'artichaut à traiter parvienne à la tête de rotation équipée d'au moins une lame (1) conçue pour effectuer l'épluchage par rotation de la partie extérieure de l'artichaut lui-même, la tête de rotation étant montée sur un corps cylindrique creux (9) mobile en rotation et en translation verticale pour permettre la rotation progressive de la tige de l'artichaut, dans lequel ladite au moins une lame (1) est montée sur un coulisseau (5) mobile en translation horizontale le long d'une paroi (14) reliée rigidement au corps cylindrique creux (9), le coulisseau (5) étant équipé de moyens de réglage manuel (18, 18A) destinés à adapter manuellement le diamètre de rotation de la tige de l'artichaut à une taille moyenne d'artichaut à traiter, le mécanisme étant **caractérisé en ce qu'**il comporte également des moyens mécaniques (33, 38, 36, 47, 46, 45, 43, 40, 39) et/ou des moyens mécatroniques (33, 67, 69, 65, 64, 63, 62) destinés à mesurer automatiquement le diamètre de l'artichaut en cours de traitement et à adapter simultanément la distance de travail de ladite au moins une lame (1) par translation du coulisseau (5) le long de la paroi de manière à éplucher automatiquement par rotation chaque artichaut sur la base du diamètre réel mesuré entre les deux mâchoires (57, 58) opposées l'une à l'autre.

2. Mécanisme selon la revendication 1, **caractérisé en ce que** les moyens mécaniques (33, 38, 36, 47, 46, 45, 43, 40, 39) comprennent une premier axe (39) mobile en translation conjointement avec l'une des mâchoires (58) et appartenant à un premier levier (40) qui comprend, à une extrémité relative, une fente (42) à l'intérieur de laquelle coulisse et peut être fixé un deuxième axe (41) appartenant à un deuxième levier (43) relié lui-même à un troisième levier (45) qui transfère le mouvement de translation du premier axe (39) à un rouleau (47) qui coulisse sur un plan incliné (46) contraint au troisième levier (45), **en ce que** le rouleau (47) est lui-même contraint à une tige (49) mobile en translation dont une extrémité est reliée à un quatrième levier (36) mobile en rotation autour d'un troisième axe et qui transfère le mouvement de translation de la tige (49) à un vérin pneumatique (38) dont le piston est relié à un cinquième levier (33) qui est relié respectivement par une pièce à l'arbre de commande (32) de la machine par une came (31) et un sixième levier (37), et de l'autre côté à une tige de commande (22) positionnée à l'intérieur du corps cylindrique creux (9) et qui détermine le mouvement de translation du coulisseau (5) sur lequel est fixée la première lame (1) sur la base du mouvement d'ouverture ou de fermeture des mâchoires (57, 58), et donc du diamètre de l'artichaut en cours de traitement, tel que mesuré par le mouvement du premier axe (39) et transmis par les autres composants mécaniques, décrits ci-dessus, à la tige de commande (22).

3. Mécanisme selon la revendication 1, **caractérisé en ce que** les moyens mécatroniques (33, 67, 69, 65, 64, 63, 62) comprennent un transducteur de position (62) destiné à mesurer le mouvement d'ouverture ou de fermeture des mâchoires (57, 58) par rapport à une position de base prédéterminée, un microprocesseur qui traite les informations relatives au mouvement mesuré par le transducteur (62) et qui commande un moteur électrique (65) auquel une liaison (69, 67) est reliée, elle-même reliée à une extrémité d'un autre levier (33) qui est relié respectivement d'une part à l'arbre de commande (32) de la machine par une came (31) et un autre levier (37), et d'autre part à une tige de commande (22) située à l'intérieur du corps cylindrique creux (9) et qui détermine le mouvement en translation du coulisseau (5) sur lequel est fixée la première lame (1) sur la base du mouvement d'ouverture ou de fermeture des mâchoires (57, 58), et donc du diamètre de l'artichaut en cours de traitement, tel que mesuré par le mouvement du première axe (39) et transmis par les autres composants mécaniques susmentionnés à la tige de commande (22).

4. Mécanisme selon l'une des revendications précédentes, **caractérisé en ce que** la tige de commande (22) est reliée au coulisseau (5) sur lequel est fixée la première lame (1) à l'aide d'un levier (7) coudé à angle droit, pivotant (8) sur la paroi fixe (14), dans lequel une première extrémité dudit levier (7) coudé à angle droit est en forme de fourche et vient en engagement avec un axe (6) solidaire du coulisseau, tandis qu'une deuxième extrémité dudit levier (7) coudé à angle droit est reliée par un autre axe (13) à la tige de commande.

5. Mécanisme selon l'une quelconque des revendications 1 à 3, **caractérisé en ce que** la tige de commande (22) est reliée au coulisseau (5A) sur lequel est fixée la première lame (1) à l'aide d'un secteur denté (68) pouvant tourner autour d'un axe fixe (70), dans lequel le secteur denté s'engage sur un côté avec une première crémaillère solidaire du coulisseau (5A) et de l'autre côté avec une deuxième crémaillère solidaire de la tige de commande (22).

6. Mécanisme selon l'une des revendications précédentes, **caractérisé en ce qu'**il comprend une deuxième lame (2) inclinée par rapport à l'axe de rotation et qui tourne le fond de l'artichaut en lui donnant une forme conique ou arrondie conique.
